# EUROPEAN PATENT APPLICATION

(11) **EP 3 915 680 A1**
(43) Date of publication of application: **01.12.2021**
(21) Application number: 20744996.8
(22) Date of filing: 20.01.2020
(51) Int. Cl.: B01J 35/04, B01D 53/94, F01N 3/08, F01N 3/10, F01N 3/28, B01J 23/63

(54) **CATALYST FOR PURIFYING EXHAUST GAS**

(30) Priority: 22.01.2019 JP 2019008182
(71) Applicant: Mitsui Mining & Smelting Co., Ltd., Shinagawa-ku Tokyo 141-8584 (JP)
(72) Inventor: MORITA Itaru, Ageo-shi, Saitama 362-0025 (JP); KURAMOCHI Satoru, Ageo-shi, Saitama 362-0025 (JP); KOGAWA Takahiro, Ageo-shi, Saitama 362-0025 (JP); WAKABAYASHI Takashi, Ageo-shi, Saitama 362-0025 (JP)
(74) Representative: Novagraaf Technologies
(86) International application number: PCT/JP2020/001762
(87) International publication number: WO 2020/153309

(57) **Abstract**

An exhaust gas purification catalyst is provided which can be more enhanced in NOx purification performance. An exhaust gas purification catalyst including a substrate, a NOx storage layer located over the substrate, an oxidation catalyst layer located over a part of the NOx storage layer, the part being located upstream in an exhaust gas flow direction, and a reduction catalyst layer located over a part of the NOx storage layer, the part being located downstream in an exhaust gas flow direction, wherein the NOx storage layer includes an oxidation catalyst including Pd or Pd and Pt, and a NOx storage material including at least one element selected from the group consisting of an alkali metal, an alkali earth metal and a rare-earth element, the oxidation catalyst layer includes an oxidation catalyst including Pt or Pt and Pd, the reduction catalyst layer includes a reduction catalyst including Rh, and a total content rate (mol%) of Pt and Pd based on a total content rate (100mol%) of metal element(s) in the oxidation catalyst layer is higher than a total content rate (mol%) of Pt and Pd based on a total content rate (100mol%) of metal elements in the NOx storage layer.

## Description

### Technical Field

The present invention relates to an exhaust gas purification catalyst which can be used for purifying exhaust gases discharged from internal-combustion engines of automobiles or the like.

### Background Art

Exhaust gases from internal-combustion engines of automobiles or the like with gasoline as fuel contain harmful components such as hydrocarbons (HC) due to unburned fuel, carbon monoxide (CO) due to incomplete combustion, and nitrogen oxides (NOx) due to excessive combustion temperatures. Any catalyst is used for treating such exhaust gases from internal-combustion engines (hereinafter, referred to as "exhaust gas purification catalyst"). Such an exhaust gas purification catalyst performs purification by, for example, converting hydrocarbons (HC) into water and carbon dioxide by oxidization, converting carbon monoxide (CO) into carbon dioxide by oxidization, and converting nitrogen oxides (NOx) into nitrogen by reduction. Such an exhaust gas purification catalyst is installed in the form of a convertor, to an exhaust pipe at the middle position between an engine and a muffler.

Any exhaust gas purification catalyst put into practical use is, for example, a NOx storage reduction catalyst, in order to purify exhaust gases discharged from internal-combustion engines such as diesel engines or lean combustion (lean-burn) engines low in rate of fuel consumption. Such a NOx storage reduction catalyst has an oxidation catalyst function of oxidizing NOx, a NOx storage function of storing NOx oxidized, and a reduction catalyst function of reducing NOx stored, to N₂.

Such a NOx storage reduction catalyst oxidizes NOx in exhaust gases emitted from internal-combustion engines such as lean-burn engines, to NO₂ or NO₃ by an oxidation catalyst, and occludes NO₂ or NO₃ obtained by oxidation, to a NOx storage material, in a lean state (oxygen excess atmosphere); and emits NOx stored to the NOx storage material and reduces NOx emitted, to harmless N₂ by a reduction catalyst, in a stoichiometric-rich state (the equivalent point of the theoretical air fuel ratio, or in a fuel excess atmosphere).

As internal-combustion engines to be burned even in an oxygen excess atmosphere, such as diesel engines and lean-burn engines, are reviewed for enhancement in fuel efficiency, a NOx storage reduction catalyst for use in exhaust gas purification apparatuses for these engines is demanded to be enhanced in NOx purification performance. For example, Patent Literature 1 discloses an exhaust gas purification catalyst including a substrate, a catalystsupporting layer supported on the substrate, and Pt, Pd, Rh and a NOx storage material supported on the catalystsupporting layer, wherein high concentrations of Pt and Pd are supported upstream in the exhaust gas flow direction, and a high concentration of Rh is supported downstream in the exhaust gas flow direction.

Patent Literature 2 discloses an exhaust gas purification catalyst including a first catalyst powder including a first carrier and Pt, a second catalyst powder including a second carrier and Rh, and a third catalyst powder including a third carrier, Pd and a NOx storage material. Patent Literature 2 also discloses an exhaust gas purification catalyst having a three-layer structure including, on a substrate, a catalyst layer (I) including a first catalyst powder, as an upper layer (surface layer), a catalyst layer (III) including a third catalyst layer, as an intermediate layer, and a catalyst layer (II) including a second catalyst powder, as a lower layer (closest to the substrate). Patent Literature 2 also discloses an exhaust gas purification catalyst, wherein a first catalyst section including a first catalyst substrate with a first catalyst powder supported thereon, a second catalyst section including a second catalyst substrate with a second catalyst powder supported thereon, and a third catalyst section including a third catalyst substrate with a third catalyst powder supported thereon are disposed in the order of the first catalyst section, the third catalyst section and the second catalyst section from the upstream of an exhaust gas passage. Furthermore, Patent Literature 2 also discloses an exhaust gas purification catalyst including a first catalyst layer including a first catalyst powder and a second catalyst layer including a second catalyst powder and a third catalyst powder, wherein the first catalyst layer is disposed on an upper layer of a substrate and the second catalyst layer is disposed on a lower layer of the substrate, and exhaust gas is to be brought into contact with the first catalyst layer and then brought into contact with the second catalyst layer.

### Citation List

### Patent Literatures

Patent Literature 1: Japanese Patent Laid-Open No. 2006-231204
Patent Literature 2: Japanese Patent Laid-Open No. 2010-46656

### Summary of Invention

### Technical Problems

However, the exhaust gas purification catalyst disclosed in Patent Literature 1, where Rh and the NOx storage material are mixed and present in one catalyst layer, thus has the problem of being reduced in catalyst activity of Rh due to such a NOx storage material having basicity, and not being sufficient in exhaust gas purification performance.

In addition, the exhaust gas purification catalyst disclosed in Patent Literature 2, also where the NOx storage material having basicity and Rh are mixed and present, thus has the problem of being reduced in catalyst activity of Rh.

Furthermore, the three-layer-structured exhaust gas purification catalyst disclosed in Patent Literature 2 also has the problem of not being sufficiently improved in purification performance of NOx.

Thus, the exhaust gas purification catalysts disclosed in Patent Literatures 1 and 2 have the problem of not being sufficiently improved in purification performance of NOx.

An object of the present invention is then to provide an exhaust gas purification catalyst which can be more enhanced in NOx purification performance.

### Solution to Problems

The present invention proposes an exhaust gas purification catalyst, including:
a substrate,
a NOx storage layer located over the substrate,
an oxidation catalyst layer located over a part of the NOx storage layer, the part being located upstream in an exhaust gas flow direction, and
a reduction catalyst layer located over a part of the NOx storage layer, the part being located downstream in an exhaust gas flow direction,
wherein
the NOx storage layer contains an oxidation catalyst including Pd or Pd and Pt, and a NOx storage material including at least one element selected from the group consisting of an alkali metal, an alkali earth metal and a rare-earth element,
the oxidation catalyst layer contains at least one oxidation catalyst selected from Pt or Pt and Pd,
the reduction catalyst layer contains a reduction catalyst including Rh, and
a total content rate (mol%) of Pt and Pd based on a total content rate (100mol%) of metal element(s) in the oxidation catalyst layer is higher than a total content rate (mol%) of Pt and Pd based on a total content rate (100mol%) of metal elements in the NOx storage layer.

### Advantageous Effects of Invention

The exhaust gas purification catalyst proposed by the present invention can be an exhaust gas purification catalyst which can be more enhanced in purification performance of NOx, by providing a NOx storage layer on a substrate, providing an oxidation catalyst layer on a part of the NOx storage layer, located upstream in the exhaust gas flow direction, and furthermore providing a reduction catalyst layer on a part of the NOx storage layer, the part being located downstream in the exhaust gas flow direction, thereby disposing the NOx storage layer, the oxidation catalyst layer and the reduction catalyst layer in respective three regions separated.

### Brief Description of Drawings

[Figure 1] Figure 1 is a schematic perspective view of an exhaust gas purification catalyst according to one embodiment.
[Figure 2] Figure 2 is a partial cross-sectional view of a substrate cut in a direction in parallel with the axis direction (the same direction as the exhaust gas flow direction) thereof.
[Figure 3] Figure 3 is a schematic view illustrating a state of production of a test piece by cutting the exhaust gas purification catalyst in a direction (thickness direction) perpendicular to the exhaust gas flow direction.
[Figure 4A] Figure 4A is a schematic perspective view of a portion of the test piece of the exhaust gas purification catalyst.
[Figure 4B] Figure 4B is an enlarged view of a portion of a cut cross section of the test piece of the exhaust gas purification catalyst.
[Figure 4C] Figure 4C is an enlarged view of one cell in the cut cross section of the test piece of the exhaust gas purification catalyst.

### Description of Embodiments

The present invention will be hereinafter described based on embodiments; however, the present invention is not limited to embodiments described below.

One example of embodiments of the present invention relates to an exhaust gas purification catalyst including a substrate, a NOx storage layer located over the substrate, an oxidation catalyst layer located over a part of the NOx storage layer, the part being located upstream in the exhaust gas flow direction, and a reduction catalyst layer located over a part of the NOx storage layer, the part being located downstream in the exhaust gas flow direction, wherein the NOx storage layer contains an oxidation catalyst including Pd or Pd and Pt, and a NOx storage material including at least one or more of an alkali metal, an alkali earth metal and a rare-earth element, the oxidation catalyst layer contains an oxidation catalyst including Pt or Pt and Pd, the reduction catalyst layer contains a reduction catalyst including Rh, and the total content rate (mol%) of Pt and Pd based on the total content rate (100mol%) of metal element(s) in the oxidation catalyst layer is higher than the total content rate (mol%) of Pt and Pd based on the total content rate (100mol%) of metal elements in the NOx storage layer.

The total content rate (mol%) of Pt and Pd based on the total content rate (100mol%) of metal element(s) in the oxidation catalyst layer is herein also referred to as the "total content rate (mol%) of Pt and Pd in the oxidation catalyst layer". The total content rate (mol%) of Pt and Pd based on the total content rate (100mol%) of metal elements in the NOx storage layer is herein also referred to as the "total content rate (mol%) of Pt and Pd in the NOx storage layer".

An aspect where NOx is stored by the NOx storage material herein encompasses both an aspect where NOx is physically adsorbed by the NOx storage material and an aspect where NOx is chemically adsorbed by the NOx storage material, namely, an aspect where NOx chemically reacts with the NOx storage material and thus is absorbed by the NOx storage material.

The exhaust gas purification catalyst includes the NOx storage layer, the oxidation catalyst layer and the reduction catalyst layer disposed in respective three regions separated. The exhaust gas purification catalyst has a bilayer structure upstream in the exhaust gas flow direction, where the NOx storage layer serving as a lower layer and the oxidation catalyst layer serving as an upper layer are stacked on the substrate, and has a bilayer structure downstream in the exhaust gas flow direction, where the NOx storage layer serving as a lower layer and the reduction catalyst layer serving as an upper layer are stacked on the substrate.

The exhaust gas purification catalyst, in which the total content rate (mol%) of Pt and Pd in the oxidation catalyst layer is higher than the total content rate (mol%) of Pt and Pd in the NOx storage layer, thus rapidly oxidizes NOx in exhaust gas to NO₂ or NO₃ by Pt in the oxidation catalyst layer provided upstream in the exhaust gas flow direction, when is in a lean state (oxygen excess atmosphere). The NOx storage layer is disposed downstream of and under the oxidation catalyst layer, and thus allows NO₂ or NO₃ obtained by oxidization to be rapidly moved to the NOx storage layer and allows such NO₂ or NO₃ to be physically or chemically adsorbed by the NOx storage material due to Pd in the NOx storage layer. Herein, NOx in exhaust gas may also be moved to the NOx storage layer and physically or chemically adsorbed by the NOx storage material, without being oxidized in the oxidation catalyst layer.

The exhaust gas purification catalyst, when is in a stoichiometric-rich state (the equivalent point of the theoretical air fuel ratio, and a fuel excess atmosphere), allows the oxidation catalyst layer to more rapidly oxidize hydrocarbon (HC) and carbon monoxide (CO) in exhaust gas, due to consumption of oxygen in exhaust gas, and allows a reducing atmosphere to be more rapidly achieved downstream of and under the oxidation catalyst, thereby enabling desorption of NOx from the NOx storage layer to be promoted. If such desorption of NOx is promoted, NOx desorbed can be smoothly moved to the reduction catalyst layer disposed downstream of and above the NOx storage layer. Hydrocarbon (HC) and carbon monoxide (CO) as reducing agents then reach the reduction catalyst layer in a state after consumption of oxygen reactive with hydrocarbon (HC) and carbon monoxide (CO), and therefore NOx moved to the reduction catalyst layer is rapidly reduced to N₂. Thus, the exhaust gas purification catalyst can be enhanced in exhaust gas purification performance.

The exhaust gas purification catalyst includes the reduction catalyst layer which is disposed with being separated from regions of the oxidation catalyst layer and the NOx storage layer, and thus Rh can be excluded from the oxidation catalyst layer and the NOx storage layer. Thus, the catalyst activity is maintained without any alloying of Pd which is included in the NOx storage layer and Pd which can be included in the oxidation catalyst layer, with Rh, and therefore exhaust gas purification performance can be enhanced.

Such excluding of Rh from the oxidation catalyst layer or the NOx storage layer here means excluding of Rh intentionally included to such an extent that the effects of the present invention are not exerted, from the oxidation catalyst layer or the NOx storage layer, and a small amount of Rh may be included in the oxidation catalyst layer or the NOx storage layer. For example, the content rate of Rh included in the oxidation catalyst layer or NOx storage layer based on the total content rate (100mol%) of noble metal(s) in the oxidation catalyst layer or the NOx storage layer may be 10mol% or less.

The exhaust gas purification catalyst includes the NOx storage layer which is disposed with being separated from regions of the oxidation catalyst layer and the reduction catalyst layer, and thus the NOx storage material can be excluded from the oxidation catalyst layer and the reduction catalyst layer. Thus, the catalyst activity can be maintained without any reduction in catalyst activities of Pt included in the oxidation catalyst layer and Rh included in the reduction catalyst layer due to such a NOx storage material having basicity, and therefore exhaust gas purification performance can be enhanced.

Such excluding of the NOx storage material from the oxidation catalyst layer or the reduction catalyst layer means excluding of the NOx storage material intentionally included to such an extent that the effects of the present invention are not exerted, from the oxidation catalyst layer or the reduction catalyst layer, and a small amount of the NOx storage material may be included in the oxidation catalyst layer or the reduction catalyst layer. For example, the total content rate of an alkali metal, an alkali earth metal and a rare-earth element which can each serve as the NOx storage material, based on the total content rate (100mol%) of metal element(s) in the oxidation catalyst layer or the reduction catalyst layer, may be 10mol% or less. Such a rate of 10mol% is meant that an alkali metal, an alkali earth metal and a rare-earth element are each included not as the NOx storage material, but in other component(s) (for example, a catalyst carrier and/or an oxygen storage material).

### Substrate

The substrate of the exhaust gas purification catalyst, here used, can be any known substrate which can be used as a substrate for exhaust gas purification catalysts, and is preferably a honeycomb-shaped substrate.

Examples of the material of a substrate including a honeycomb-shaped substrate include ceramics and metals. Examples of the material of such a ceramic substrate can include a refractory ceramic material, for example, cordierite, silicon carbide, mullite, silica-alumina, and alumina. Examples of the material of such a metallic substrate can include a refractory metal, for example, stainless steel.

In a case where such a honeycomb-shaped substrate is applied, for example, any substrate can be used which has many parallel and fine gas flow paths, namely, cells in the substrate so that any fluid can flow into the substrate. Examples of such a substrate can include a wall-flow type substrate and a flow-through type substrate. Herein, respective catalyst layers partitioned to three disposing regions of the oxidation catalyst layer, the NOx storage layer and the reduction catalyst layer can be formed on the inner wall surface of each of the cells of the substrate.

### NOx storage layer

The NOx storage layer includes an oxidation catalyst including Pd or Pd and Pt, and a NOx storage material including at least one element selected from the group consisting of an alkali metal, an alkali earth metal and a rare-earth element. Pd or Pt may be included in the form of a metal, or may be included in the form of an oxide.

The NOx storage layer is located over the substrate in the exhaust gas purification catalyst, and corresponds to a lower layer located relative to the oxidation catalyst layer provided upstream in the exhaust gas flow direction and the reduction catalyst layer provided downstream in the exhaust gas flow direction, among the respective three catalyst layers of the NOx storage layer, the oxidation catalyst layer and the reduction catalyst layer.

Examples of the alkali metal include at least one selected from the group consisting of Li, Na, K and Rb. Examples of the alkali earth metal include at least one selected from the group consisting of Mg, Ca, Sr and Ba. Examples of the rare-earth element include at least one selected from the group consisting of Sc, Y, La, Ce, Pr, Nd, Pm, Sm, Eu, Gd, Tb, Dy, Ho, Er, Tm, Yb and Lu. The NOx storage material includes at least one element selected from the alkali metal, the alkali earth metal and the rare-earth element, and may include two or more of such elements.

The NOx storage material may be an oxide including at least one element selected form the alkali metal, the alkali earth metal and the rare-earth element, or may be a composite oxide including at least one element selected form the alkali metal, the alkali earth metal and the rare-earth element.

The NOx storage material may also be an oxide including at least one element of the alkali metal, the alkali earth metal and the rare-earth element, in which the oxide may be, for example, a composite oxide present in the form of a solid solution with a catalyst carrier such as alumina.

The NOx storage material may also be a compound including at least one element selected from the alkali metal, the alkali earth metal and the rare-earth element, for example, a compound such as acetate or carbonate.

Specific examples of the NOx storage material include cerium oxide (for example, ceria (CeO₂)), a composite oxide of Mg and Al (for example, a magnesiaalumina solid solution (MgO-Al₂O₃)), and a barium compound (for example, barium carbonate (BaCO₃)).

It is preferable in the NOx storage layer that the total content rate of Pt and Pd in the NOx storage layer based on the total content rate (100mol%) of noble metal(s) included in the NOx storage layer be 90mol% or more and that the total content rate of the alkali metal, the alkali earth metal and the rare-earth element based on the total content rate (100mol%) of metal elements included in the NOx storage layer be 50mol% or more.

In a case where the total content rate of Pt and Pd in the NOx storage layer based on the total content rate (100mol%) of metal elements included in the NOx storage layer is 90mol% or more in the NOx storage layer, the catalyst activity can be maintained without any alloying of Pd included in the NOx storage layer with Rh which can be included as any noble metal other than Pd and Pt, and therefore exhaust gas purification performance can be enhanced.

In a case where the total of the alkali metal, the alkali earth metal and the rare-earth element in the NOx storage layer based on the total content rate (100mol%) of metal elements included in the NOx storage layer is 50mol% or more, NO₂ or NO₃ formed by oxidation of NOx in the oxidation catalyst layer can be highly adsorbed by the NOx storage layer, in a lean state.

The total content rate of Pt and Pd in the NOx storage layer based on the total content rate (100mol%) of noble metal(s) included in the NOx storage layer is more preferably 92mol% or more, further preferably 95mol% or more, still further preferably 98mol% or more, still further preferably 100mol%, in the NOx storage layer. Furthermore, only Pd is preferably included as such noble metal(s) included in the NOx storage layer.

The total content rate of the alkali metal, the alkali earth metal and the rare-earth element in the NOx storage layer based on the total content rate (100mol%) of metal elements included in the NOx storage layer is more preferably 60mol% or more, further preferably 65mol% or more.

The total content rate (mol%) of Pt and Pd based on the total content rate (100mol%) of noble metal(s) included in the NOx storage layer can be measured by the following method.

After a test piece is cut out from the exhaust gas purification catalyst and a curable resin is embedded in the test piece and cured, the NOx storage layer in the cross section in the thickness direction of the exhaust gas purification catalyst is analyzed with SEM-EDX as a combination of a scanning electron microscope (SEM) with an energy dispersive X-ray spectrometer (Energy Dispersive X-ray Spectrometry, EDX).

Noble metals here analyzed are Pt, Pd, Rh, Ir, Ru and Os.

The value determined by dividing the total content rate of Pt and Pd, obtained by analysis, by the total content rate of the noble metals, obtained by analysis, and multiplying the resulting quotient by a factor of 100 is defined as the total content rate (mol%) of Pt and Pd based on the total content rate (100mol%) of noble metal(s) included in the NOx storage layer.

The total content rate (mol%) of the alkali metal, the alkali earth metal and the rare-earth element based on the total (100mol%) of metal elements included in the NOx storage layer can be measured by the following method.

After a test piece is cut out from the exhaust gas purification catalyst and the test piece is subjected to a pulverizing treatment, metal element(s) are/is analyzed according to X-ray fluorescence Spectrometry (X-ray Fluorescence Spectrometer, XRF).

Any 20 metal elements higher in content rate in decreasing order are identified. In a case where the substrate is included in the test piece, any element forming the substrate may be included in such 20 elements.

After a test piece is cut out from the exhaust gas purification catalyst and a curable resin is embedded in the test piece and cured, the NOx storage layer in the cross section in the thickness direction of the exhaust gas purification catalyst is analyzed with SEM-EDX.

Metal elements here analyzed with SEM-EDX are the above 20 metal elements.

The value determined by dividing the total content rate of the alkali metal, the alkali earth metal and the rare-earth element, obtained by analysis with SEM-EDX, by the total content rate of the 20 metal elements, and multiplying the resulting quotient by a factor of 100 is defined as the total content rate (mol%) of the alkali metal, the alkali earth metal and the rare-earth element based on the total content rate (100mol%) of metal elements included in the NOx storage layer.

The total content rate of Pt and Pd, under the assumption that the total content rate of noble metal(s) included in the NOx storage layer is 100mol%, can be calculated from the compounding amount of various raw materials forming the NOx storage layer. The total content rate of the alkali metal, the alkali earth metal and the rare-earth element, under the assumption that the total content rate of metal elements included in the NOx storage layer is 100mol%, can be similarly calculated from the compounding amount of various raw materials forming the NOx storage layer.

In a case where Pt is included in the NOx storage layer, the ratio (Pd/Pt) of the content rate of Pd (mol%) to the content rate of Pt (mol%) is preferably 0.01 or more and 10.0 or less, more preferably 7 or less, further preferably 5 or less. In a case where the ratio (Pd/Pt) of the content rate of Pd (mol%) to the content rate of Pt (mol%) in the NOx storage layer is 0.01 or more and 10.0 or less, NOx moved to the NOx storage layer from the oxidation catalyst layer disposed upstream in the exhaust gas flow direction can be rapidly adsorbed by the NOx storage layer.

The total content rate of Pt and Pd in the NOx storage layer based on the total content rate (100mol%) of metal elements included in the NOx storage layer is preferably 0.01mol% or more and 10mol% or less, more preferably 0.1mol% or more and 5mol% or less, further preferably 0.2mol% or more and 2.5mol% or less. In a case where the total content rate of Pt and Pd in the NOx storage layer based on the total content rate of metal elements included in the NOx storage layer is in the range of 0.01mol% or more and 10mol% or less, NOx moved to the NOx storage layer from the oxidation catalyst layer disposed upstream in the exhaust gas flow direction can be rapidly adsorbed by the NOx storage layer.

### Oxidation catalyst layer

The oxidation catalyst layer in the exhaust gas purification catalyst is an upper layer which is on the NOx storage layer as a lower layer, and is provided upstream in the exhaust gas flow direction. The oxidation catalyst layer contains Pt or Pt and Pd. Pd or Pt may be included in the form of a metal, or may be included in the form of an oxide. The total content rate (mol%) of Pt and Pd in the oxidation catalyst layer is higher than the total content rate (mol%) of Pt and Pd in the NOx storage layer.

Such an oxidation catalyst layer, in a lean state, can rapidly oxidize NOx in exhaust gas to NO₂ or NO₃ by Pt. Such an oxidation catalyst layer, in a stoichiometric-rich state, can more rapidly oxidize hydrocarbon (HC) and carbon monoxide (CO) in exhaust gas due to consumption of oxygen in exhaust gas, to result in a state after consumption of oxygen reactive with hydrocarbon (HC) and carbon monoxide (CO), downstream of and under the oxidation catalyst layer, thereby not only promoting desorption of NOx from the NOx storage layer, but also promoting reduction of NOx in the reduction catalyst layer. Thus, the exhaust gas purification catalyst can be enhanced in exhaust gas purification performance.

It is preferable in the oxidation catalyst layer that the total content rate of Pt and Pd in the oxidation catalyst layer based on the total content rate (100mol%) of noble metal(s) included in the oxidation catalyst layer be 90mol% or more and that the total content rate of an alkali metal, an alkali earth metal and a rare-earth element based on the total content rate (100mol%) of metal element(s) included in the oxidation catalyst layer be 10mol% or less.

In a case where the total content rate of Pt and Pd in the oxidation catalyst layer based on the total content rate (100mol%) of noble metal(s) included in the oxidation catalyst layer is 90mol% or more in the oxidation catalyst layer, the catalyst activity can be maintained without any alloying of Pd which can be included in the oxidation catalyst layer with Rh which can be included as any noble metal other than Pd and Pt, and therefore exhaust gas purification performance can be enhanced.

In a case where the total content rate of an alkali metal, an alkali earth metal and a rare-earth element based on the total content rate (100mol%) of metal element(s) included in the oxidation catalyst layer is 10mol% or less in the oxidation catalyst layer, the catalyst activity of Pt can be maintained and exhaust gas purification performance can be enhanced at a low content rate of a basic element, for example, an alkali metal, an alkali earth metal or a rare-earth metal.

The total content rate of Pt and Pd in the oxidation catalyst layer based on the total content rate (100mol%) of noble metal(s) included in the oxidation catalyst layer is more preferably 92mol% or more, further preferably 95mol% or more, still further preferably 98mol% or more, and may be 100mol%, in the oxidation catalyst layer. Only Pt may be included as such noble metal(s) included in the oxidation catalyst layer.

The total content rate of an alkali metal, an alkali earth metal and a rare-earth element in the oxidation catalyst layer based on the total content rate (100mol%) of metal elements included in the NOx storage layer is more preferably 9mol% or less, further preferably 8mol% or less, still further preferably 7mol% or less in the oxidation catalyst layer.

The total content rate (mol%) of Pt and Pd based on the total content rate (100mol%) of noble metal(s) included in the oxidation catalyst layer can be measured by the same method as in the NOx storage layer. The total content rate (mol%) of an alkali metal, an alkali earth metal and a rare-earth element based on the total content rate (100mol%) of metal element(s) included in the oxidation catalyst layer can be similarly measured.

The total content rate of Pt and Pd, under the assumption that the total content rate of noble metal(s) included in the oxidation catalyst layer is 100mol%, can be calculated from the compounding amount of various raw materials forming the oxidation catalyst layer. The total content rate of an alkali metal, an alkali earth metal and a rare-earth element, under the assumption that the total content rate of metal element(s) included in the oxidation catalyst layer is 100mol%, can be similarly calculated from the compounding amount of various raw materials forming the oxidation catalyst layer.

The ratio (Total content rate of Pt and Pd in oxidation catalyst layer/Total content rate of Pt and Pd in NOx storage layer) of the total content rate (mol%) of Pt and Pd in the oxidation catalyst layer to the total content rate (mol%) of Pt and Pd in the NOx storage layer is preferably 1.5 or more and 10.0 or less.

In a case where the ratio is 1.5 or more and 10.0 or less, the oxidation catalyst layer, in a lean state, enables NOx in exhaust gas to be rapidly oxidized and adsorbed by the NOx storage layer, and, in a stoichiometric-rich state, enables hydrocarbon (HC) and carbon monoxide (CO) in exhaust gas to be more rapidly oxidized due to consumption of oxygen in exhaust gas, to allow a reducing atmosphere to be more rapidly achieved downstream of and under the oxidation catalyst layer, thereby not only promoting desorption of NOx from the NOx storage layer, but also promoting reduction of NOx to N₂ in the reduction catalyst layer.

The ratio of the total content rate (mol%) of Pt and Pd in the oxidation catalyst layer to the total content rate (mol%) of Pt and Pd in the NOx storage layer is more preferably 1.5 or more and 10.0 or less, further preferably 2.0 or more and 9.5 or less, still further preferably 2.2 or more and 9.0 or less.

The ratio (Pd/Pt) of the content rate of Pd (mol%) to the content rate of Pt (mol%) in the oxidation catalyst layer is preferably 0 or more and 0.6 or less, more preferably 0.01 or more and 0.5 or less, further preferably 0.02 or more and 0.4 or less. In a case where the ratio (Pd/Pt) of the content rate of Pd to the content rate of Pt in the oxidation catalyst layer is 0 or more and 0.6 or less, NOx in exhaust gas can be rapidly oxidized.

The total content rate of Pt and Pd in the oxidation catalyst layer based on the total content rate (100mol%) of metal element(s) included in the oxidation catalyst layer is preferably 0.5mol% or more and 30mol% or less, more preferably 1mol% or more and 25mol% or less, further preferably 2mol% or more and 20mol% or less. In a case where the total content rate of Pt and Pd in the oxidation catalyst layer based on the total content rate of metal element(s) included in the oxidation catalyst layer is in the range of 0.5mol% or more and 30mol% or less, NOx in exhaust gas can be rapidly oxidized.

### Reduction catalyst layer

The reduction catalyst layer in the exhaust gas purification catalyst is an upper layer which is on the NOx storage layer as a lower layer, and is provided downstream in the exhaust gas flow direction. The reduction catalyst layer contains a reduction catalyst including Rh. Rh may be included in the form of a metal, or may be included in the form of an oxide.

It is preferable in the reduction catalyst layer that the content rate of Rh in the reduction catalyst layer based on the total content rate (100mol%) of noble metal(s) included in the reduction catalyst layer be 90mol% or more and that the total content rate of an alkali metal, an alkali earth metal and a rare-earth element based on the total content rate (100mol%) of metal element(s) included in the reduction catalyst layer be 10mol% or less.

In a case where the content rate of Rh in the reduction catalyst layer based on the total content rate (100mol%) of noble metal(s) included in the reduction catalyst layer is 90mol% or more, the catalyst activity can be maintained without any alloying of Rh with Pd which can be included as any noble metal other than Rh, and therefore exhaust gas purification performance can be enhanced.

In a case where the total content rate of an alkali metal, an alkali earth metal and a rare-earth element based on the total content rate (100mol%) of metal element(s) included in the reduction catalyst layer is 10mol% or less in the reduction catalyst layer, a low content rate of a basic element enables the activity of the reduction catalyst including Rh to be maintained and enables exhaust gas purification performance to be enhanced.

The content rate of Rh in the reduction catalyst layer based on the total content rate (100mol%) of noble metal(s) included in the reduction catalyst layer is more preferably 92mol% or more, further preferably 95mol% or more, still further preferably 98mol% or more, still further preferably 100mol% in the reduction catalyst layer.

The total content rate of an alkali metal, an alkali earth metal and a rare-earth element in the reduction catalyst layer based on the total content rate (100mol%) of metal element(s) included in the reduction catalyst layer is more preferably 9mol% or less, further preferably 8mol% or less, still further preferably 7mol% or less in the reduction catalyst layer.

The content rate (mol%) of Rh based on the total content rate (100mol%) of noble metal(s) included in the reduction catalyst layer can be measured by the same method as in the NOx storage layer. The total content rate (mol%) of an alkali metal, an alkali earth metal and a rare-earth element based on the total (100mol%) of metal element(s) included in the reduction catalyst layer can be similarly measured.

The content rate of Rh, under the assumption that the total content rate of noble metal(s) included in the reduction catalyst layer is 100mol%, can be calculated from the compounding amount of various raw materials forming the reduction catalyst layer. The total content rate of an alkali metal, an alkali earth metal and a rare-earth element, under the assumption that the total content rate of metal element(s) included in the reduction catalyst layer is 100mol%, can be similarly calculated from the compounding amount of various raw materials forming the reduction catalyst layer.

The content rate of Rh in the reduction catalyst layer based on the total content rate (100mol%) of metal element(s) included in the reduction catalyst layer is preferably 0.001mol% or more and 3mol% or less, more preferably 0.002mol% or more and 2mol% or less, further preferably 0.005mol% or more and 1.5mol% or less. In a case where the content rate of Rh in the reduction catalyst layer based on the total content rate of metal element(s) included in the reduction catalyst layer is in the range of 0.001mol% or more and 3mol% or less, NOx desorbed from the NOx storage layer can be rapidly reduced to N₂ and subjected to purification, in a stoichiometric-rich state.

### Exhaust gas purification catalyst

Hereinafter, an exhaust gas purification catalyst of the present embodiment will be described based on the drawings in more detail.

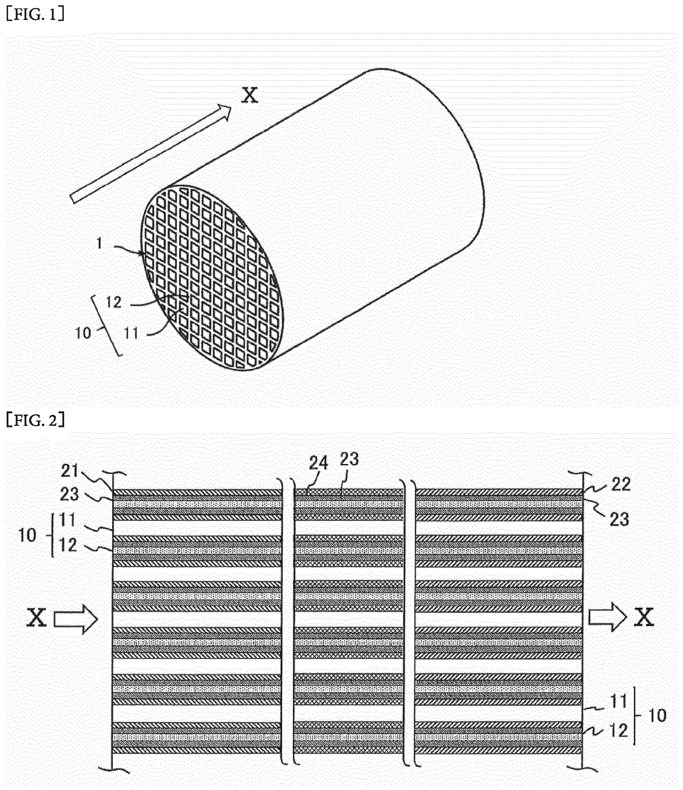

Figure 1 is a schematic perspective view of an exhaust gas purification catalyst according to the present embodiment.

An exhaust gas purification catalyst 1 includes a flow-through type substrate 10, a NOx storage layer 23, an oxidation catalyst layer 21 and a reduction catalyst layer 22. Figure 1 does not illustrate the NOx storage layer 23, the oxidation catalyst layer 21 and the reduction catalyst layer 22. The exhaust gas purification catalyst 1 is disposed in an exhaust line of an internal-combustion engine so that the axis direction of the substrate 10 substantially matches an exhaust gas flow direction X. Herein, the "length" herein means the dimension in the axis direction of the substrate 10, unless otherwise specified, and the "thickness" means the dimension in a direction perpendicular to the axis direction of the substrate 10, unless otherwise specified.

As illustrated in Figure 1, the flow-through type substrate 10 has a plurality of cells 11, and each partition section 12 which partitions the plurality of cells 11. The substrate 10 has the partition section 12 which is present between adjacent two cells 11, and the cells 11 are partitioned by the partition section 12. The substrate 10 includes a cylindrical section which defines the outer shape of the substrate 10, and the partition section 12 is formed in the cylindrical section. Figure 1 does not illustrate the cylindrical section. The shape of the cylindrical section is, for example, a cylindrical shape, and may be any other shape. Examples of such any other shape include an oval cylindrical shape and a polygonal cylindrical shape. The axis direction of the substrate 10 substantially matches the axis direction of the cylindrical section.

Figure 2 illustrates an enlarged view of a partial cross section cut in a direction in parallel with the axis direction of the substrate 10 (the same direction as the exhaust gas flow direction).

As illustrated in Figure 1 and Figure 2, a plurality of holes each opening at both exhaust gas inflow and exhaust gas outflow ends are formed in the substrate 10, and spaces in such holes create such cells 11.

Each of the plurality of cells 11 extends in the exhaust gas flow direction X, and has an exhaust gas inflow end in the exhaust gas flow direction X and an exhaust gas outflow end in the exhaust gas flow direction X. Both the exhaust gas inflow end in the exhaust gas flow direction X and the exhaust gas outflow end in the exhaust gas flow direction X are opened. Hereinafter, the exhaust gas inflow end of each of the cells 11 is also referred to as "exhaust gas inflow opening of each of the cells 11", and the exhaust gas outflow end of each of the cells 11 is also referred to as "exhaust gas outflow opening of each of the cells 11".

Examples of a plan-view shape of the exhaust gas inflow opening of each of the cells 11 (the shape of the substrate 10, which is planarly viewed in the exhaust gas flow direction X) include various geometric shapes including rectangles such as a square, a parallelogram, an oblong and a trapezoid, polygonal shapes such as a triangle shape, a hexagonal shape and an octagon shape, and round shapes and oval shapes.

Examples of a plan-view shape of the exhaust gas outflow opening of each of the cells 11 (the shape of the substrate 10, which is planarly viewed in an opposite direction to the exhaust gas flow direction X) include various geometric shapes including rectangles such as a square, a parallelogram, an oblong and a trapezoid, polygonal shapes such as a triangle shape, a hexagonal shape and an octagon shape, and round shapes and oval shapes.

The area of the plan-view shape of the exhaust gas inflow opening of each of the cells 11 and the area of the plan-view shape of the exhaust gas outflow opening of each of the cells 11 may be the same as or different from each other.

The cell density per square inch of the substrate 10 is, for example, 400 cells or more and 1200 cells or less. The cell density per square inch of the substrate 10 is here the total number of the cells 11 per square inch in the cross section obtained by cutting the substrate 10 along a plane surface perpendicular to the exhaust gas flow direction X.

The thickness of the partition section 12 is, for example, 50 µm or more and 120 µm or less. In a case where the thickness of the partition section 12 is not constant, the average value of such thicknesses measured at a plurality of points is defined as the thickness of the partition section 12.

As illustrated in Figure 2, the NOx storage layer 23 is formed on a surface of the partition section 12 along with the exhaust gas flow direction X from the exhaust gas inflow end to the exhaust gas outflow end, and the oxidation catalyst layer 21 is formed on the NOx storage layer 23 closer to the exhaust gas inflow end and the reduction catalyst layer 22 is formed on the NOx storage layer 23 closer to the exhaust gas outflow end.

The ratio of the area of the oxidation catalyst layer 21 to the area of the NOx storage layer 23 (Area of oxidation catalyst layer 21/Area of NOx storage layer 23) in the cross section in the thickness direction of the exhaust gas purification catalyst 1 is preferably 0.1 or more and less than 1.0, more preferably 0.1 or more and 0.7 or less, more preferably 0.1 or more and 0.5 or less, further preferably 0.1 or more and 0.3 or less in the exhaust gas purification catalyst 1. In a case where the ratio of the area of the oxidation catalyst layer 21 to the area of the NOx storage layer 23 is in the range of 0.1 or more and less than 1.0, the oxidation catalyst layer 21 provided as an upper layer (surface layer) and the NOx storage layer 23 provided as a lower layer are well balanced, NOx in exhaust gas is rapidly oxidized to NO₂ or NO₃ by Pt in the oxidation catalyst layer 21 and NO₂ or NO₃ formed by oxidation is rapidly moved to and adsorbed by the NOx storage layer 23 as a lower layer, and exhaust gas purification performance can be enhanced. The area of the oxidation catalyst layer 21 may be the same as or different from the area of the reduction catalyst layer 22 in the cross section in the thickness direction of the exhaust gas purification catalyst 1, as long as the ratio to the area of the NOx storage layer 23 is in the above range.

The ratio of the area of the oxidation catalyst layer 21 to the area of the NOx storage layer 23 (Area of oxidation catalyst layer 21/Area of NOx storage layer 23) in the cross section in the thickness direction of the exhaust gas purification catalyst 1 may be herein referred to as "area ratio A".

The ratio of the area of the reduction catalyst layer 22 to the area of the NOx storage layer 23 (Area of reduction catalyst layer 22/Area of NOx storage layer 23) in the cross section in the thickness direction of the exhaust gas purification catalyst 1 is preferably 0.1 or more and less than 1.0, more preferably 0.1 or more and 0.7 or less, more preferably 0.1 or more and 0.5 or less, further preferably 0.1 or more and 0.3 or less in the exhaust gas purification catalyst 1. In a case where the ratio of the area of the reduction catalyst layer 22 to the area of the NOx storage layer 23 is in the range of 0.1 or more and less than 1.0, the reduction catalyst layer 22 provided as an upper layer (surface layer) and the NOx storage layer 23 provided as a lower layer are well balanced, and NOx desorbed by the NOx storage layer 23 is rapidly reduced to N₂ by Rh in the reduction catalyst layer 22, in a stoichiometric-rich state, and exhaust gas purification performance can be enhanced.

The ratio of the area of the reduction catalyst layer 22 to the area of the NOx storage layer 23 (Area of reduction catalyst layer 22/Area of NOx storage layer 23) in the cross section in the thickness direction of the exhaust gas purification catalyst 1 may be herein referred to as "area ratio B".

It is preferable in the exhaust gas purification catalyst 1 that the ratio of the area of the exhaust gas flow space 13 to the area of the NOx storage layer 23 and the area of the oxidation catalyst layer 21 in total (Area of exhaust gas flow space 13/ area of NOx storage layer 23 and area of oxidation catalyst layer 21 in total) in the cross section in the thickness direction of the exhaust gas purification catalyst 1 be 2.0 or more and 2.2 or less. In a case where the area of the exhaust gas flow space 13 based on the area of the NOx storage layer 23 and the area of the oxidation catalyst layer 21 in total is in the range of 2.0 or more and 2.2 or less, the NOx storage layer 23 and the oxidation catalyst layer 21 which can sufficiently purify flowing exhaust gas can be present, and exhaust gas purification performance can be enhanced. The area of the NOx storage layer 23 and the area of the oxidation catalyst layer 21 in total may be the same as or different from the area of the NOx storage layer 23 and the area of the reduction catalyst layer 22 in total, as long as the ratio of the total of such areas to the area of the exhaust gas flow space 13 is in the above range.

The ratio of the area of the exhaust gas flow space 13 to the area of the NOx storage layer 23 and the area of the oxidation catalyst layer 21 in total (Area of exhaust gas flow space 13/ area of NOx storage layer 23 and area of oxidation catalyst layer 21 in total) in the cross section in the thickness direction of the exhaust gas purification catalyst 1 may be herein referred to as "area ratio C".

It is preferable in the exhaust gas purification catalyst 1 that the ratio of the area of the exhaust gas flow space 13 to the area of the NOx storage layer 23 and the area of the reduction catalyst layer 22 in total (Area of exhaust gas flow space 13/ area of NOx storage layer 23 and area of reduction catalyst layer 22 in total) in the cross section in the thickness direction of the exhaust gas purification catalyst 1 be 2.0 or more and 2.2 or less. In a case where the area of the exhaust gas flow space 13 based on the area of the NOx storage layer 23 and the area of the reduction catalyst layer 22 in total is in the range of 2.0 or more and 2.2 or less, the NOx storage layer 23 and the reduction catalyst layer 22 which can sufficiently purify flowing exhaust gas can be present, and exhaust gas purification performance can be enhanced.

The ratio of the area of the exhaust gas flow space 13 to the area of the NOx storage layer 23 and the area of the reduction catalyst layer 22 in total (Area of exhaust gas flow space 13/area of NOx storage layer 23 and area of reduction catalyst layer 22 in total) in the cross section in the thickness direction of the exhaust gas purification catalyst 1 may be herein referred to as "area ratio D".

The method for calculating the area ratios A and C is as follows.

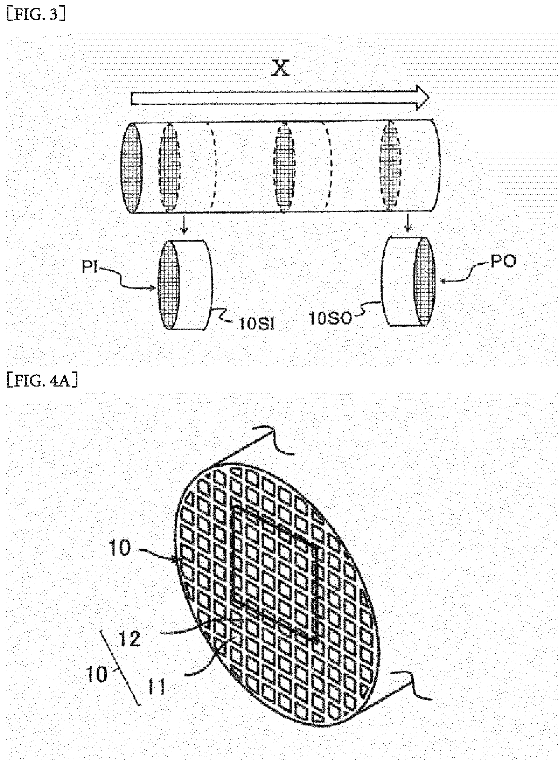

Figure 3 is a schematic view illustrating a state where the exhaust gas purification catalyst 1 is cut in a direction (thickness direction) perpendicular to the exhaust gas flow direction to produce a test piece. A part of the exhaust gas purification catalyst, which is cut, is not particularly limited, and such a part which is located within 10% of the entire length in the axis direction of the substrate 10 from the exhaust gas inflow end is cut with respect to the substrate 10, to form a test piece 10SI, thereby allowing for easy observation of the area of a cross section of the NOx storage layer and the area of a cross section of the oxidation catalyst layer in a cut cross section PI of the test piece 10SI of the exhaust gas purification catalyst 1. The thickness of the test piece 10SI is not particularly limited, and may be any thickness which can allow for observation of such a cross section PI closer to the exhaust gas inflow end.

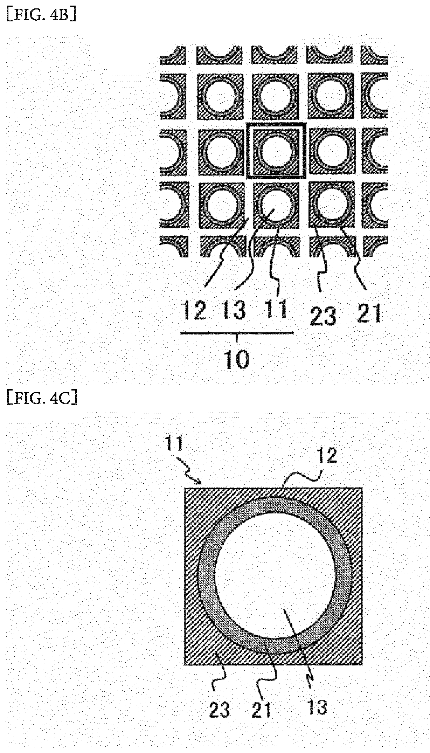

Figure 4A is a schematic perspective view of the test piece, Figure 4B is an enlarged view of a portion of the cut cross section, and Figure 4C is an enlarged view of one of the cells 11 in the cut cross section. One of the cells 11 in the cut cross section PI of the test piece 10SI of the exhaust gas purification catalyst 1 is observed with a scanning electron microscope (SEM). The field magnification in SEM observation is, for example, 1000. A region in which the partition section 12 is present, a region in which the NOx storage layer 23 is present, a region in which the oxidation catalyst layer 21 is present and a region in which the exhaust gas flow space 13 is present can be identified based on the difference in form among the regions. When the cut cross section is observed, element mapping of the cut cross section may be performed. Such element mapping can be performed by, for example, combination use of both observation of the cut cross section with SEM and compositional analysis of the cut cross section. Such element mapping can be performed by, for example, use of a scanning electron microscope-energy dispersive X-ray spectrometer (SEM-EDX), an electron probe microanalyzer (EPMA), or a transmission type X-ray inspection apparatus. The region in which the partition section 12 is present, the region in which the NOx storage layer 23 is present, the region in which the oxidation catalyst layer 21 is present and the region in which the exhaust gas flow space 13 is present can be identified based on the differences in form and composition among the regions.

After each of the regions is identified in one of the cells 11 in the cut cross section PI of the test piece 10SI of the exhaust gas purification catalyst 1, the area of the NOx storage layer 23, the area of the oxidation catalyst layer 21 and the area of the exhaust gas flow space 13 can be measured with image analysis software. The image analysis software here used can be, for example, any software built in a digital microscope (product name: VHX-5000, manufactured by Keyence Corporation). Twenty cells arbitrarily selected in the cut cross section closer to the exhaust gas inflow end in the exhaust gas flow direction X of the exhaust gas purification catalyst 1 can be subjected to calculation of the area of the NOx storage layer 23, the area of the oxidation catalyst layer 21 and the area of the exhaust gas flow space 13 with respect to each of the cells, and the resulting average values can be defined as the area of the NOx storage layer 23, the area of the oxidation catalyst layer 21 and the area of the exhaust gas flow space 13, respectively. The area ratios A and C can be calculated from such values.

The area ratios B and D can be calculated in the same manner as in the area ratios A and C.

A part of the exhaust gas purification catalyst, which is cut, is not particularly limited, and such a part which is located within 10% of the entire length in the axis direction of the substrate 10 from the exhaust gas outflow end is cut with respect to the substrate 10, to form a test piece 10SO.

A cut cross section PO of the test piece 10SO of the exhaust gas purification catalyst 1 is observed with a scanning electron microscope. The region in which the partition section 12 is present, the region in which the NOx storage layer 23 is present, the region in which the reduction catalyst layer 22 is present and the region in which the exhaust gas flow space 13 is present can be identified based on the difference(s) in form and/or composition among the regions.

After each of the regions is identified in one of the cells 11 in the cut cross section PO of the test piece 10SO of the exhaust gas purification catalyst 1, the area of the NOx storage layer 23, the area of the reduction catalyst layer 22 and the area of the exhaust gas flow space 13 can be measured with image analysis software. Twenty cells arbitrarily selected in the cut cross section closer to the exhaust gas outflow end in the exhaust gas flow direction X of the exhaust gas purification catalyst can be subjected to calculation of the area of the NOx storage layer 23, the area of the reduction catalyst layer 22 and the area of the exhaust gas flow space 13 with respect to each of the cells, and the resulting average values can be defined as the area of the NOx storage layer 23, the area of the reduction catalyst layer 22 and the area of the exhaust gas flow space 13, respectively. The area ratios B and D can be calculated from such values.

The exhaust gas purification catalyst 1 preferably has a mixed layer 24 including both the oxidation catalyst layer 21 and the reduction catalyst layer 22, between the oxidation catalyst layer 21 and the reduction catalyst layer 22, in the exhaust gas flow direction X (direction of flow of exhaust gas). The mixed layer 24 preferably exists over a range of 1% or more and 20% or less of the entire length (100%) of the substrate 10 or the NOx storage layer 23 in the exhaust gas flow direction X (the axis direction of the substrate). In a case where the range of presence of the mixed layer 24 is the range of 1% or more and 20% or less of the entire length of the substrate 10, decreases in activities of the oxidation catalyst and the reduction catalyst can be suppressed. Here, a lean state allows for promotion of oxidation of NOx in the oxidation catalyst layer 21 and adsorption of the resultant by the NOx storage layer 23, upstream in the exhaust gas flow direction. Furthermore, a stoichiometric-rich state allows for not only promotion of desorption of NOx from the NOx storage layer 23, but also rapid reduction of NOx desorbed from the NOx storage layer, to N₂. Therefore, exhaust gas purification performance can be enhanced. In a case where the mixed layer 24 is present, the mixed layer 24 is different from the oxidation catalyst layer 21 and the reduction catalyst layer 22.

### Method for producing exhaust gas purification catalyst

### Preparation of slurry

The method for producing the exhaust gas purification catalyst involves preparing a slurry for an oxidation catalyst layer, for formation of an oxidation catalyst layer, a slurry for a NOx storage layer, for formation of a NOx storage layer, and a slurry for a reduction catalyst layer, for formation of a reduction catalyst layer. Such each slurry is produced by mixing and stirring a catalytically active component, a NOx storage material and a catalyst carrier, and, if necessary, a stabilizer, a binder, other component and water. The binder here used can be a water-soluble solution of an inorganic binder such as alumina sol.

Production method of exhaust gas purification catalyst

The exhaust gas purification catalyst is produced by, for example, coating a substrate such as a honeycomb-shaped ceramic substrate with such each slurry, and calcination the resultant to form each layer.

First, the slurry for a NOx storage layer is coated to the entire substrate, and the resultant is dried to form a NOx storage layer.

Next, the slurry for an oxidation catalyst layer is coated to a part of the substrate, corresponding to 40% to 60% of the entire length of the substrate from one end of the substrate, the end being located upstream in the exhaust gas flow direction, and the resultant is dried to form an oxidation catalyst layer.

Thereafter, the slurry for a reduction catalyst layer is coated to a part of the substrate, corresponding to 40% to 60% of the entire length of the substrate from other end of the substrate, the end being located downstream in the exhaust gas flow direction, and the resultant is dried to form a reduction catalyst layer.

Thus, the exhaust gas purification catalyst can be produced by forming a NOx storage layer on a substrate, an oxidation catalyst layer located over a part of the NOx storage layer, the part being located upstream in the exhaust gas flow direction, and a reduction catalyst layer located over a part of the NOx storage layer, the part being located downstream in the exhaust gas flow direction, and calcination the resultant.

The viscosity of such each slurry is not particularly limited as long as the viscosity is any viscosity which enables the substrate to be coated with the slurry. The viscosity of such each slurry can be, for example, prepared to 5,000 cp or more and 40,000 cp or less, in particular, 5,000 cp or more and/or 35,000 cp or less, in particular, 5,000 cp or more and/or 30,000 cp or less from the viewpoint that such coating is facilitated.

The temperature of such drying after coating with such each slurry is, for example, 80°C or more and 200°C or less, in particular, preferably 100°C or more and 150°C or less.

The method for producing the exhaust gas purification catalyst, here applied, can be any known method, and is not limited to the above example.

### Examples

Hereinafter, the present invention will be described based on Examples and Comparative Examples in more detail. The present invention is not limited to these Examples.

### Example 1

### 1. Preparation of slurry

### Slurry for oxidation catalyst layer

A powder was prepared by mixing an alumina powder and a cerium-zirconium composite oxide powder (containing 5% by mass of CeO₂, 1.5% by mass of La₂O₃ and 5% by mass of Nd₂O₃ as components other than ZrO₂.) at a mass ratio of 1:1, and subjecting the mixture to a pulverizing treatment so that the average particle size (median size on a volume basis) D50 was 5 µm. The powder prepared was impregnated with a separately-prepared aqueous solution in which a Pt nitrate solution and a Pd nitrate solution were mixed at a mass ratio of 5:1. Furthermore, alumina sol and water as a solvent were mixed therewith, thereby preparing a slurry for an oxidation catalyst layer, for formation of an oxidation catalyst layer.

The slurry for an oxidation catalyst layer was here prepared so that the contents of various raw materials therein based on 100% by mass of the total amount of the oxidation catalyst layer were as follows: ZrO₂: 37.55% by mass, CeO₂: 2.12% by mass, La₂O₃: 0.64% by mass, Nd₂O₃: 2.12% by mass, alumina (Al₂O₃): 51.85% by mass, Pt: 4.76% by mass, and Pd: 0.96% by mass.

### Slurry for NOx storage layer

A powder was prepared by mixing a ceria powder and a MgO-Al₂O₃ solid solution powder (containing 28% by mass of MgO and 72% by mass of Al₂O₃ in MgO-Al₂O₃ solid solution.) at a mass ratio of 20:7, and subjecting the mixture to a pulverizing treatment so that the average particle size D50 was 5 µm. The powder prepared was impregnated with a separately-prepared aqueous solution in which a Pt nitrate solution and a Pd nitrate solution were mixed at a mass ratio of 3:1. Furthermore, a barium acetate powder and water as a solvent were mixed therewith, thereby preparing a slurry for a NOx storage layer, for formation of a NOx storage layer.

The slurry for a NOx storage layer was here prepared so that the contents of various raw materials therein based on 100% by mass of the total amount of the NOx storage layer were as follows: CeO₂: 69.19% by mass, MgO: 6.78% by mass, alumina (Al₂O₃): 17.44% by mass, Ba: 5.2% by mass, Pt: 1.04% by mass, and Pd: 0.35% by mass.

### Slurry for reduction catalyst layer

A cerium-zirconium composite oxide powder (containing 5% by mass of CeO₂, 1.5% by mass of La₂O₃ and 5% by mass of Nd₂O₃ as components other than ZrO₂.) having an average particle size D50 of 8 µm was prepared. The cerium-zirconium composite oxide powder prepared was impregnated with a Rh nitrate solution. Furthermore, alumina sol and water as a solvent were mixed therewith, thereby preparing a slurry for a reduction catalyst layer, for formation of a reduction catalyst layer.

The slurry for a reduction catalyst layer was here prepared so that the contents of various raw materials therein based on 100% by mass of the total amount of the reduction catalyst layer were as follows: ZrO₂: 79.32% by mass, CeO₂: 4.48% by mass, La₂O₃: 1.34% by mass, Nd₂O₃: 4.48% by mass, alumina (Al₂O₃): 9.97% by mass, and Rh: 0.41% by mass.

### 2. Formation of NOx storage layer (lower layer)

A commercially available cordierite flow-through type substrate (600 cells/square inch, diameter: 78 mm; length: 77 mm) was prepared. The prepared slurry for a NOx storage layer was filled in a part of the substrate, the part being located upstream in the exhaust gas flow direction, and the slurry was suctioned downstream of the substrate. Thereafter, the resultant was dried at 100°C for 20 minutes. Next, the prepared slurry for a NOx storage layer was filled in a part of the substrate, the part being located downstream in the exhaust gas flow direction, and the slurry was suctioned upstream of the substrate. Thereafter, the resultant was dried at 100°C for 20 minutes. Thus, a NOx storage layer was formed on the entire substrate.

### 3. Formation of oxidation catalyst layer (upper layer)

The slurry for an oxidation catalyst layer was filled in a part of the substrate on which the NOx storage layer was formed, the part being located upstream in the exhaust gas flow direction, and the slurry was suctioned downstream of the substrate. Thus, the slurry for an oxidation catalyst layer was coated onto a part of the NOx storage layer, corresponding to a length of 60% of the entire length of the substrate from an upstream end of the NOx storage layer in the exhaust gas flow direction. Thereafter, the resultant was dried at 100°C for 20 minutes, thereby forming an oxidation catalyst layer as an upper layer.

### 4. Formation of reduction catalyst layer (upper layer)

The slurry for a reduction catalyst layer was filled in a part of the substrate on which the NOx storage layer was formed, the part being located downstream in the exhaust gas flow direction, the slurry for a reduction catalyst layer was suctioned upstream of the substrate, the slurry for a reduction catalyst layer was coated onto a part of the NOx storage layer, corresponding to a length of 50% of the entire length of the substrate from a downstream end of the NOx storage layer in the exhaust gas flow direction, and the resultant was dried at 100°C for 20 minutes, thereby forming a reduction catalyst layer as an upper layer.

### 5. Calcination

After the NOx storage layer, the oxidation catalyst layer and the reduction catalyst layer were formed on the substrate, the resultant was calcined at 450°C for 1 hour, thereby producing an exhaust gas purification catalyst of Example 1.

The exhaust gas purification catalyst of Example 1 included the NOx storage layer formed on the entire substrate, namely, corresponding to 100% of the entire length of the substrate in the exhaust gas flow direction, and the oxidation catalyst layer formed over a range of 50% of the entire length of the substrate from an upstream end in the exhaust gas flow direction. The exhaust gas purification catalyst of Example 1 included the reduction catalyst layer formed over a range of 40% of the entire length of the substrate from a downstream end in the exhaust gas flow direction. The exhaust gas purification catalyst of Example 1 included a mixed layer including both the oxidation catalyst layer and the reduction catalyst layer, between the oxidation catalyst layer and the reduction catalyst layer, and the mixed layer existed over a range of 10% of the entire length of the substrate or the NOx storage layer in the exhaust gas flow direction.

### Oxidation catalyst layer

The total content rate of an alkali metal, an alkali earth metal and a rare-earth element (Ce, La, Nd) based on the total content rate (100mol%) of metal elements included in the oxidation catalyst layer was 2.10mol%. The ratio (Pd/Pt) of the content rate of Pd (mol%) to the content rate of Pt (mol%) in the oxidation catalyst layer was 0.37. The total content rate of Pt and Pd based on the total (100mol%) of metal elements included in the oxidation catalyst layer was 2.40mol%. The ratio (Total of Pt and Pd in oxidation catalyst layer/Total of Pt and Pd in NOx storage layer) of the total content rate (mol%) of Pt and Pd in the oxidation catalyst layer to the total content rate (mol%) of Pt and Pd in the NOx storage layer was 2.69.

### NOx storage layer

The content rate of Pt and Pd based on the total content rate of noble metal(s) in the NOx storage layer was 100mol%. The total content rate of an alkali metal, an alkali earth metal and a rare-earth element (Mg, Ba, Ce) based on the total (100mol%) of metal elements in the NOx storage layer was 63.4mol%. The total content of Pt and Pd based on the total (100mol%) of metal elements in the NOx storage layer was 0.90mol%.

### Reduction catalyst layer

The content rate of Rh based on the total content rate of noble metal(s) in the reduction catalyst layer was 100mol%. The total content rate of an alkali metal, an alkali earth metal and a rare-earth element (Ce, La, Nd) based on the total (100mol%) of metal element(s) included in the reduction catalyst layer was 6.73mol%. The total content of Rh based on the total (100mol%) of metal element(s) in the reduction catalyst layer was 0.44mol%.

### Example 2

A slurry for an oxidation catalyst layer was prepared as a slurry for an oxidation catalyst layer in the same manner as in Example 1 except that the respective masses of any components other than noble metals were 0.5 times those of Example 1.

A slurry for a reduction catalyst layer was prepared as a slurry for a reduction catalyst layer in the same manner as in Example 1 except that the respective masses of any components other than noble metal(s) were 0.5 times those of Example 1.

An exhaust gas purification catalyst of Example 2 was produced in the same manner as in Example 1 except that the slurry for an oxidation catalyst layer and the slurry for a reduction catalyst layer were used.

### Example 3

A slurry for an oxidation catalyst layer was prepared as a slurry for an oxidation catalyst layer in the same manner as in Example 1 except that the respective masses of any components other than noble metals were 1.5 times those of Example 1.

A slurry for a reduction catalyst layer was prepared as a slurry for a reduction catalyst layer in the same manner as in Example 1 except that the respective masses of any components other than noble metal(s) were 1.5 times those of Example 1.

An exhaust gas purification catalyst of Example 3 was produced in the same manner as in Example 1 except that the slurry for an oxidation catalyst layer and the slurry for a reduction catalyst layer were used.

### Example 4

A slurry for an oxidation catalyst layer was prepared as a slurry for an oxidation catalyst layer in the same manner as in Example 1 except that the respective masses of any components other than noble metals were 1.1 times those of Example 1.

A slurry for a NOx storage layer was prepared as a slurry for a NOx storage layer in the same manner as in Example 1 except that the respective masses of any components other than noble metals were 1.1 times those of Example 1.

A slurry for a reduction catalyst layer was prepared as a slurry for a reduction catalyst layer in the same manner as in Example 1 except that the respective masses of any components other than noble metal(s) were 1.1 times those of Example 1.

An exhaust gas purification catalyst was produced in the same manner as in Example 1 except that the slurry for an oxidation catalyst layer, the slurry for a NOx storage layer and the slurry for a reduction catalyst layer were used.

### Comparative Example 1: exhaust gas purification catalyst having three-layered catalyst layer

### 1. Formation of reduction catalyst layer as lower layer

A commercially available cordierite flow-through type substrate (600 cells/square inch, diameter: 78 mm; length: 77 mm) was prepared. The slurry for a reduction catalyst layer of Example 1 was filled in a part of the substrate, the part being located upstream in the exhaust gas flow direction, and the slurry was suctioned downstream of the substrate. Thereafter, the resultant was dried at 100°C for 20 minutes. Next, the slurry for a reduction catalyst layer of Example 1 was filled in a part of the substrate, the part being located downstream in the exhaust gas flow direction, and the slurry was suctioned upstream of the substrate. Thereafter, the resultant was dried at 100°C for 20 minutes. Thus, the slurry for a reduction catalyst layer was used at the same mass as in Example 1, thereby forming a reduction catalyst layer as a lower layer on the entire substrate.

### 2. Formation of NOx storage layer as intermediate layer

The slurry for a NOx storage layer of Example 1 was filled in a part of the substrate on which the reduction catalyst layer was formed, the part being located upstream in the exhaust gas flow direction, and the slurry was suctioned downstream of the substrate. Thereafter, the resultant was dried at 100°C for 20 minutes. Next, the slurry for a NOx storage layer of Example 1 was filled in a part of the substrate, located downstream, and the slurry was suctioned upstream of the substrate. Thereafter, the resultant was dried at 100°C for 20 minutes. Thus, the slurry for a NOx storage layer was used at the same mass as in Example 1, thereby forming a NOx catalyst layer as an intermediate layer on the entire substrate.

### 3. Formation of oxidation catalyst layer as upper layer

The slurry for an oxidation catalyst layer of Example 1 was filled in a part of the substrate on which the NOx storage layer and the reduction catalyst layer were formed, the part being located upstream in the exhaust gas flow direction, and the slurry was suctioned downstream of the substrate. Thereafter, the resultant was dried at 100°C for 20 minutes. Next, the slurry for an oxidation catalyst layer of Example 1 was filled in a part of the substrate, located downstream, and the slurry was suctioned upstream of the substrate. Thereafter, the resultant was dried at 100°C for 20 minutes. Thus, the slurry for an oxidation catalyst layer was used at the same mass as in Example 1, thereby forming an oxidation catalyst layer as an upper layer on the entire substrate.

### 4. Calcination

The substrate on which the reduction catalyst layer, the NOx storage layer and the oxidation catalyst layer were stacked in the listed order on the substrate was calcined at 450°C for 1 hour, thereby producing an exhaust gas purification catalyst of Comparative Example 1. The exhaust gas purification catalyst of Comparative Example 1 had a three-layer structure of the reduction catalyst layer as a lower layer, the NOx storage layer as an intermediate layer and the oxidation catalyst layer as an upper layer, on the substrate.

Comparative Example 2: exhaust gas purification catalyst having upstream catalyst layer and downstream catalyst layer

### 1. Preparation of slurry

### Slurry for upstream catalyst layer

The slurry for an oxidation catalyst layer Example 1 was prepared in the same amount as the mass used in Example 1. The slurry for a NOx storage layer of Example 1 was prepared in an amount of 0.5 times the mass thereof used in Example 1. These slurries were mixed, thereby preparing a slurry for an upstream catalyst layer.

### Slurry for downstream catalyst layer

The slurry for a reduction catalyst layer of Example 1 was prepared in the same amount as the mass used in Example 1. The slurry for a NOx storage layer of Example 1 was prepared in an amount of 0.5 times the mass thereof used in Example 1. These slurries were mixed, thereby preparing a slurry for a downstream catalyst layer.

### 2. Formation of upstream catalyst layer

A commercially available cordierite flow-through type substrate (600 cells/square inch, diameter: 78 mm; length: 77 mm) was prepared. The slurry for an upstream catalyst layer was filled in a part of the substrate, the part being located upstream in the exhaust gas flow direction, and the slurry was suctioned downstream of the substrate. Thus, the slurry for an upstream catalyst layer was coated onto a part of the substrate, corresponding to a length of 50% of the entire length of the substrate from an upstream end of the substrate in the exhaust gas flow direction. Thereafter, the resultant was dried at 100°C for 20 minutes, thereby forming an upstream catalyst layer.

### 3. Formation of downstream catalyst layer

The slurry for a downstream catalyst layer was filled in a part of the substrate, the part being located downstream in the exhaust gas flow direction, opposite to the substrate on which the upstream catalyst layer was formed, and the slurry was suctioned upstream of the substrate. Thus, the slurry for a downstream catalyst layer was coated onto a part of the substrate, corresponding to a length of 50% of the entire length of the substrate from a downstream end of the substrate in the exhaust gas flow direction. Thereafter, the resultant was dried at 100°C for 20 minutes, thereby forming a downstream catalyst layer.

### 4. Calcination

The substrate on which the upstream catalyst layer was formed upstream in the exhaust gas flow direction and the downstream catalyst layer was formed downstream in the exhaust gas flow direction was calcined at 450°C for 1 hour, thereby producing an exhaust gas purification catalyst of Comparative Example 2. The resulting exhaust gas purification catalyst had a structure where an upstream catalyst layer including Pt and Pd each serving as an oxidation catalyst and a NOx storage material was formed upstream in the exhaust gas flow direction and a downstream catalyst layer including Rh as a reduction catalyst and a NOx storage material was formed downstream in the exhaust gas flow direction.

### Comparative Example 3: exhaust gas purification catalyst having bilayer catalyst layer

### 1. Preparation of slurry

### Slurry for upper catalyst layer

The slurry for an oxidation catalyst layer Example 1 was prepared in the same amount as the mass used in Example 1. The slurry for a reduction catalyst layer of Example 1 was prepared in the same amount as the mass used in Example 1. These slurries were mixed, thereby preparing a slurry for an upper catalyst layer.

### 2. Formation of lower catalyst layer (NOx storage layer)

A commercially available cordierite flow-through type substrate (600 cells/square inch, diameter: 78 mm; length: 77 mm) was prepared. A NOx storage layer (lower catalyst layer) was formed on the entire substrate in the same manner as in Example 1.

### 3. Formation of upper catalyst layer

The slurry for an upper catalyst layer was filled in a part of the substrate on which the NOx storage layer was formed, the part being located upstream in the exhaust gas flow direction, and the slurry was suctioned downstream of the substrate. Thereafter, the resultant was dried at 100°C for 20 minutes. Next, the slurry for an upper catalyst was filled in a part of the substrate, located downstream, and the slurry was suctioned upstream of the substrate. Thereafter, the resultant was dried at 100°C for 20 minutes. Thus, an upper catalyst layer was formed on the entire substrate.

### 4. Calcination

The substrate on which the lower catalyst layer and the upper catalyst layer were formed was calcined at 450°C for 1 hour, thereby producing an exhaust gas purification catalyst of Comparative Example 3. The resulting exhaust gas purification catalyst had a bilayer structure where a NOx storage layer including a NOx storage material was formed as a lower layer and a redox catalyst layer including Pt and Pd each serving as an oxidation catalyst, and Rh as a reduction catalyst was formed as an upper layer.

### Measurement of NOx purification performance

After each of the exhaust gas purification catalysts of Examples and Comparative Examples was subjected to a duration treatment in an electric furnace at 750°C for 10 hours, each sample having a size of a diameter of 25.4 mm and a length of 77 mm was cut out. Respective gases in a pre-treatment condition, a lean condition and a rich condition were allowed to flow through the sample at predetermined gas speeds at predetermined test temperatures, and the NOx exhaust gas purification performance was measured with a SIGU-2000 apparatus (detector: MEXA-ONE-D1, manufactured by Horiba Ltd.).

The test was continuously performed sequentially at each temperature of 450°C, 400°C, 350°C, 300°C, 250°C and 200°C in Example 1 and Comparative Examples 1 to 3. The test was continuously performed sequentially at each temperature of 350°C, 300°C, 250°C and 200°C in Examples 2 to 4.

Specifically, the gas in a pre-treatment condition was allowed to flow through each sample of the exhaust gas purification catalysts of Examples and Comparative Examples at such each temperature at a predetermined test gas speed for 600 seconds, and a lean-rich cycle was then repeated twice where the gas in a lean condition was allowed to flow through for 55 seconds and then the gas in a rich condition was allowed to flow through for 5 seconds. A value was calculated as the rate of NOx purification by measuring the amount of flow of NOx discharged, passing through the sample in each of the cycles, with an FT-IR apparatus, dividing the amount by the amount of NO loaded to the sample, and multiplying the resultant by 100, and the rate of NOx purification obtained in each of the cycles was defined as the rate of NOx purification at such each temperature.
Test gas speed: space velocity SV = 51000/hour
Gas in pre-treatment condition: O₂: 0% by volume, CO₂: 8% by volume, C₃H₆: 500 ppmC by volume (concentration in terms of carbon), C₃H₈: 3,000 ppmC by volume, CO: 1.5% by volume, NO: 500 ppm by volume, H₂O: 10% by volume, N₂: balance
Gas in lean condition: O₂: 6% by volume, CO₂: 8% by volume, C₃H₆: 500 ppmC by volume, CO: 1,000 ppm by volume, NO: 500 ppm by volume, H₂O: 10% by volume, N₂: balance
Gas in rich condition: O₂: 0% by volume, CO₂: 8% by volume, C₃H₆: 500 ppmC by volume, C₃H₈: 3,000 ppmC by volume, CO: 1.5% by volume, NO: 500 ppm by volume, H₂O: 10% by volume, N₂: balance
Measurement of area of each catalyst layer in cross section in thickness direction of exhaust gas purification catalyst

A part of the exhaust gas purification catalyst of each of Examples, which was located within 10% of the entire length in the axis direction of the substrate from the exhaust gas inflow end in the exhaust gas flow direction X, was cut in the thickness direction, and was defined as a test piece 10SI at an exhaust gas inflow end, as illustrated in Figure 3. A part of the catalyst, which was located within 10% of the entire length in the axis direction of the substrate from the exhaust gas outflow end in the exhaust gas flow direction X, was cut in the thickness direction, and was defined as a test piece 10SO at an exhaust gas outflow end. After such test piece 10SI and test piece 10SO were each embedded in a curable resin and the resin was cured, a cross section PI of the test piece 10SI closer to the exhaust gas inflow end and a cross section PO of the test piece 10SO closer to the exhaust gas outflow end were observed at a magnification of 1000x with a scanning electron microscope (SEM: Scanning Electron Microscope, product name: MiniFlex 600, manufactured by Rigaku Corporation), as each of the cross sections in the thickness direction of the exhaust gas purification catalyst.

The resulting SEM image was taken by a digital microscope (product name: VHX-5000, manufactured by Keyence Corporation), twenty cells were arbitrarily selected in the cross section PI or the cross section PO, the area of the NOx storage layer as a lower layer, the area of the oxidation catalyst layer or the area of the reduction catalyst layer, as an upper layer, and the area of an exhaust gas flow space were measured in each of the cells, and the respective average values were defined as the area of the NOx storage layer, the area of the oxidation catalyst layer or the area of the reduction catalyst layer, and the area of an exhaust gas flow space, closer to an exhaust gas inflow end or exhaust gas outflow end in the cross section in the thickness direction of the exhaust gas purification catalyst.

The area ratios A and D in Table 2 represent the following area ratios, respectively.
Area ratio A:
   The ratio (Area of oxidation catalyst layer/Area of NOx storage layer) of the area of the oxidation catalyst layer to the area of the NOx storage layer in the cross section in the thickness direction of the exhaust gas purification catalyst
Area ratio B:
   The ratio (Area of reduction catalyst layer/Area of NOx storage layer) of the area of the reduction catalyst layer to the area of the NOx storage layer in the cross section in the thickness direction of the exhaust gas purification catalyst
Area ratio C:
   The ratio (Area of exhaust gas flow space/ area of NOx storage layer and area of oxidation catalyst layer in total) of the area of the exhaust gas flow space to the area of the NOx storage layer and the area of the oxidation catalyst layer in total in the cross section in the thickness direction of the exhaust gas purification catalyst
Area ratio D:
   The ratio (Area of exhaust gas flow space/ area of NOx storage layer and area of reduction catalyst layer in total) of the area of the exhaust gas flow space to the area of the NOx storage layer and the area of the reduction catalyst layer in total in the cross section in the thickness direction of the exhaust gas purification catalyst

Table 1 shows the configuration of each exhaust gas purification catalyst of Example 1 and Comparative Examples 1 to 3, and the components in each catalyst layer and the rate of NOx purification at each temperature.

Table 2 shows the area ratios A and D in each of Examples 1 to 4, and the rate of NOx purification at each temperature.

**[Table 1]**

| | Exhaust gas purification catalyst | | | | | | Rate of NOx purification (%) | | | | | |
|---|---|---|---|---|---|---|---|---|---|---|---|---|
| | Layer structure | | Material component | | | | 200° C | 250° C | 300° C | 350° C | 400° C | 450° C |
| Example 1 | Oxidation catalyst layer | Reduction catalyst layer | Oxidation catalyst layer | Reduction catalyst layer | NOx stora | age layer | 74.7 | 91.6 | 93.4 | 91.4 | 82.1 | 63.5 |
| | | | Noble metal component | Noble metal component | Noble metal component | NOx storage component | | | | | | |
| | NOx storage layer | | | | | | | | | | | |
| | | | Pt/Pd | Rh | Pt/Pd | Ce0₂ MgO-Al₂O₃ Ba | | | | | | |
| Comparative Example 1 | Oxidation catalyst layer | | Oxidation catalyst layer | Reduction catalyst layer | NOx stora age layer | | 69.3 | 88.2 | 90.0 | 88.1 | 80.4 | 61.3 |
| | NOx storage layer | | Noble metal component | Noble metal component | Noble metal component | NOx storage component | | | | | | |
| | Reduction catalyst layer | | Pt/Pd | Rh | Pt/Pd | Ce0₂ MgO-Al₂O₃ Ba | | | | | | |
| Comparative Example 2 | Oxidatior catalyst + NOx storage layer | Reduction catalyst + NOx storage layer | Oxidation c NOx stora atalyst + ge layer | | Reduction NOx stora catalyst + age layer | | 65.0 | 84.3 | 83.8 | 76.0 | 56.3 | 35.2 |
| | | | Noble metal component | NOx storage component | Noble metal component | NOx storage component | | | | | | |
| | | | Pt/Pd | Ce0₂ MgO-Al₂O₃ Ba | Rh | Ce0₂ MgO-Al₂O₃ Ba | | | | | | |
| Comparative Example 3 | Oxidation catalyst + Reduction catalyst layer | | Oxidation Reduction layer catalyst + catalyst er | | NOx stora age layer | | 62.9 | 79.2 | 78.7 | 76.0 | 66.2 | 50.7 |
| | | | Noble metal component | NOx storage component | Noble metal component | NOx storage component | | | | | | |
| | NOx storage layer | | | | | | | | | | | |
| | | | Pt/Pd/Rh | - | Pt/Pd | Ce0₂ MgO-Al₂O₃ Ba | | | | | | |

The exhaust gas purification catalyst of Example 1, which had a bilayer structure of the oxidation catalyst layer as an upper layer (surface layer) and the NOx storage layer as a lower layer, upstream in the exhaust gas flow direction, and had a bilayer structure of the reduction catalyst layer as an upper layer (surface layer) and the NOx storage layer as a lower layer, downstream in the exhaust gas flow direction, thus exhibited a high rate of NOx purification even at a low temperature of less than 300°C and at a high temperature of 300°C or more, as compared with the exhaust gas purification catalyst of each of Comparative Examples 1 to 3. The exhaust gas purification catalyst of Example 1, in which the oxidation catalyst layer, the NOx storage layer and the reduction catalyst layer were disposed with being separated to respective three regions, thus could be enhanced in exhaust gas purification performance. The exhaust gas purification catalyst of Example 1, when was in a lean state, enabled the oxidation catalyst layer located as an upper layer upstream in the exhaust gas flow direction to rapidly oxidize NOx in exhaust gas to NO₂, to allow the resultant to be adsorbed by the NOx storage layer as a lower layer, and, when was in a stoichiometric-rich state, enabled the oxidation catalyst layer as an upper layer located upstream to consume much oxygen for oxidation of hydrocarbon (HC) and carbon monoxide (CO) in exhaust gas, to allow for promotion of desorption of NOx from the NOx storage layer and rapid reduction of NOx desorbed, to N₂, by the reduction catalyst layer as an upper layer located downstream.

The exhaust gas purification catalyst of each of Comparative Examples 1 to 3 was reduced in rate of NOx purification in a low-temperature range and a high-temperature range, as compared with the exhaust gas purification catalyst of Example 1. The exhaust gas purification catalyst of Comparative Example 2, in which the catalyst layer including the oxidation catalyst and the NOx storage material was disposed upstream and the catalyst layer including the reduction catalyst and the NOx storage material was disposed downstream, was significantly reduced in rate of NOx purification in a high-temperature range from 400°C to 450°C.

**[Table 2]**

| | Exhaust gas purification catalyst | | | | Rate of NOx purification (%) | | | |
|---|---|---|---|---|---|---|---|---|
| | Area ratio A | Area ratio B | Area ratio c | Area ratio D | 200°C | 250°C | 300°C | 350°C |
| Example 1 | 0.2 | 0.2 | 2.0 | 2.0 | 74.7 | 91. 6 | 93.4 | 91.4 |
| Example 2 | 0.1 | 0.1 | 2.0 | 2.0 | 77.2 | 91.4 | 92.8 | 90.6 |
| Example 3 | 0.3 | 0.3 | 2.0 | 2.0 | 72.0 | 91.1 | 93.2 | 89.8 |
| Example 4 | 0.2 | 0.2 | 2.2 | 2.2 | 70.8 | 89.0 | 90.3 | 87.7 |

The exhaust gas purification catalyst of each of Examples 1 to 4, in which the area ratios A and B were in the range of 0.1 or more and 0.3 or less in the cross section in the thickness direction of the exhaust gas purification catalyst, was thus well-balanced in area ratio in the cross section of the exhaust gas purification catalyst, between the oxidation catalyst layer or reduction catalyst layer provided as an upper layer (surface layer) and the NOx storage layer provided as a lower layer, and could be enhanced in rate of exhaust gas purification in a low-temperature range and a high-temperature range.

The exhaust gas purification catalyst of each of Examples 1 to 4, in which the area ratios C and D were in the range of 2.0 or more and 2.2 or less in the cross section in the thickness direction of the exhaust gas purification catalyst, thus had the NOx storage layer and the oxidation catalyst layer or the reduction catalyst which could sufficiently purify flowing exhaust gas, and could be enhanced in rate of exhaust gas purification in a low-temperature range and a high-temperature range.

### Reference Signs List

1: exhaust gas purification catalyst, 10: substrate, 10SI: test piece closer to exhaust gas inflow end, 10SO: test piece closer to exhaust gas outflow end, 11: cell, 12: partition section, 13: exhaust gas flow space, 21: oxidation catalyst layer, 22: reduction catalyst layer, 23: NOx storage layer, 24: mixed layer, PI: cross section of test piece closer to exhaust gas inflow end, PO: cross section of test piece closer to exhaust gas outflow end, X: exhaust gas flow direction.

## Claims

1. An exhaust gas purification catalyst comprising:
a substrate;
a NOx storage layer located over the substrate;
an oxidation catalyst layer located over a part of the NOx storage layer, the part being located upstream in an exhaust gas flow direction; and
a reduction catalyst layer located over a part of the NOx storage layer, the part being located downstream in an exhaust gas flow direction,
wherein
the NOx storage layer comprises an oxidation catalyst comprising Pd or Pd and Pt, and a NOx storage material comprising at least one element selected from the group consisting of an alkali metal, an alkali earth metal and a rare-earth element,
the oxidation catalyst layer comprises an oxidation catalyst comprising Pt or Pt and Pd,
the reduction catalyst layer comprises a reduction catalyst comprising Rh, and
a total content rate (mol%) of Pt and Pd based on a total content rate (100mol%) of metal element(s) in the oxidation catalyst layer is higher than a total content rate (mol%) of Pt and Pd based on a total content rate (100mol%) of metal elements in the NOx storage layer.

2. The exhaust gas purification catalyst according to claim 1, wherein
a total content rate of Pt and Pd in the NOx storage layer based on a total content rate (100mol%) of noble metal(s) comprised in the NOx storage layer is 90mol% or more, and a total content rate of an alkali metal, an alkali earth metal and a rare-earth element based on a total content rate (100mol%) of metal element(s) comprised in the NOx storage layer is 50mol% or more,
a total content rate of Pt and Pd in the oxidation catalyst layer based on a total content rate (100mol%) of noble metal(s) comprised in the oxidation catalyst layer is 90mol% or more, and a total content rate of an alkali metal, an alkali earth metal and a rare-earth element based on a total content rate (100mol%) of metal element(s) comprised in the oxidation catalyst layer is 10mol% or less, and
a content rate of Rh in the reduction catalyst layer based on a total content rate (100mol%) of noble metal(s) comprised in the reduction catalyst layer is 90mol% or more, and a total content rate of an alkali metal, an alkali earth metal and a rare-earth element based on a total content rate (100mol%) of metal element(s) comprised in the reduction catalyst layer is 10mol% or less.

3. The exhaust gas purification catalyst according to claim 1 or 2, wherein a ratio of an area of the oxidation catalyst layer to an area of the NOx storage layer (Area of oxidation catalyst layer/Area of NOx storage layer) in a cross section in a thickness direction of the exhaust gas purification catalyst is 0.1 or more and less than 1.0.

4. The exhaust gas purification catalyst according to any one of claims 1 to 3, wherein a ratio of an area of the reduction catalyst layer to an area of the NOx storage layer (Area of reduction catalyst layer/Area of NOx storage layer) in a cross section in a thickness direction of the exhaust gas purification catalyst is 0.1 or more and less than 1.0.

5. The exhaust gas purification catalyst according to any one of claims 1 to 4, wherein a ratio of an area of an exhaust gas flow space to an area of the NOx storage layer and an area of the oxidation catalyst layer in total (Area of exhaust gas flow space/ area of NOx storage layer and area of oxidation catalyst layer in total) in a cross section in a thickness direction of the exhaust gas purification catalyst is 2.0 or more and 2.2 or less.

6. The exhaust gas purification catalyst according to any one of claims 1 to 5, wherein a ratio of an area of an exhaust gas flow space to an area of the NOx storage layer and an area of the reduction catalyst layer in total (Area of exhaust gas flow space/area of NOx storage layer and area of reduction catalyst layer in total) in a cross section in a thickness direction of the exhaust gas purification catalyst is 2.0 or more and 2.2 or less.

7. The exhaust gas purification catalyst according to any one of claims 1 to 6, wherein the catalyst comprises a mixed layer comprising the oxidation catalyst layer and the reduction catalyst layer, between the oxidation catalyst layer and the reduction catalyst layer, and the mixed layer exists over a range of 1% or more and 20% or less of an entire length of the substrate in the exhaust gas flow direction.

8. The exhaust gas purification catalyst according to any one of claims 1 to 7, wherein a ratio of a total content rate (mol%) of Pt and Pd in the oxidation catalyst layer to a total content rate (mol%) of Pt and Pd in the NOx storage layer is 1.5 or more and 10.0 or less.

9. The exhaust gas purification catalyst according to any one of claims 1 to 8, wherein a ratio of a content rate (mol%) of Pd to a total content rate (mol%) of Pt in the oxidation catalyst layer (Pd/Pt) is 0 or more and 0.6 or less.

10. The exhaust gas purification catalyst according to any one of claims 1 to 9, wherein the NOx storage layer comprises at least one selected from the group consisting of Ce oxide, a composite oxide of Mg and Al, and a Ba compound.
